# EUROPEAN PATENT APPLICATION

(11) **EP 3 617 158 A1**
(43) Date of publication of application: **04.03.2020**
(21) Application number: 18020413.3
(22) Date of filing: 28.08.2018
(51) Int. Cl.: C03B 18/20

(54) **METHOD FOR MANUFACTURING FLOAT GLASS**

(71) Applicant: Linde Aktiengesellschaft, 80331 München (DE)
(72) Inventor: Graf, Michael-Peter, 82275 Emmering (DE)
(74) Representative: Gellner, Bernd

(57) **Abstract**

Method for producing float glass comprising the following steps:
- Providing a float bath chamber (110) comprising a bed (120) of molten metal and a protective atmosphere (140) above the bed (120), the protective atmosphere comprising nitrogen and hydrogen,
- effecting a flow of molten glass onto the flow bath to provide a floating ribbon (160) of glass on the bed,
- after reducing the temperature of the floating glass ribbon (160) removing the floating glass ribbon from the bed (120),
the method further comprising the steps of controlling the protective atmosphere (140) by means of
- ascertaining an oxygen content within the protective atmosphere (140),
- calculating a desired hydrogen content and/or desired nitrogen content of the protective atmosphere based on the ascertained oxygen content, and
- supplying hydrogen and/or nitrogen to the protective atmosphere in order to provide the calculated desired hydrogen and/or nitrogen content.

## Description

The invention relates to a method for manufacturing float glass and a corresponding production unit.

Float glass is manufactured by floating molten glass on a bed of molten metal, for example molten tin or molten lead. By means of using such float glass techniques, glass sheets of uniform thickness and extremely flat surfaces can be obtained. For example, modern windows are mostly made from float glass. Typically, glass is superheated in a furnace to a temperature of more than 1500°C. The molten glass is then fed into a bed of molten tin (so called "tin bath"). The molten tin is used to provide a level and uniform surface for the molten glass to harden on. During hardening on the bed of molten tin, the temperature of the glass decreases typically to around 600°C, allowing it to be removed from the tin bath for example by lifting.

Float glass production lines, known as float baths, are typically operated with an atmosphere containing nitrogen and 3 to 10% hydrogen. Nitrogen is used to avoid air infiltration, i.e. to keep the oxygen content in the atmosphere as low as possible. Hydrogen is used as a reducing agent. Such an atmosphere ensures a low oxygen content. This is necessary in order to avoid oxidation of the molten tin. More precisely, oxidation of tin is especially dependent on the partial pressure of oxygen as well as on temperature.

Formation of tin-oxide negatively affects the glass sheet (also known as glass ribbon), and sections of the glass sheet which have been in contact with tin-oxide must be cut of after passing through an annealing lehr. Typically, more than 1% of scrap rates is based on tin-oxide induced flaws in the glass surface.

Currently, nitrogen and hydrogen are introduced into the float bath atmosphere with fixed volumes and fixed ratios, typically providing atmospheres comprising 3 to 10% hydrogen. A higher hydrogen content or hydrogen to nitrogen ratio can be beneficial from the quality perspective and in order to reduce the scrap rate. However, on the other hand, a higher hydrogen to nitrogen ratio significantly increases operating costs. Currently, processes are operated with a fixed ratio to balance quality and costs.

The invention seeks to optimize the protective atmosphere within a float glass production unit taking into account the above observations.

This object is achieved by a method for producing float glass comprising the features of claim 1, and a float glass production unit comprising the features of claim 5.
- Providing a float bath chamber comprising a bed of molten metal and a protective atmosphere above the bed, the protective atmosphere comprising nitrogen and hydrogen,
- effecting a flow of molten glass onto the flow bath to provide a floating ribbon of glass on the bed,
- after reducing the temperature of the floating glass ribbon removing the floating glass ribbon from the bed ,
- the method further comprising the steps of controlling the protective atmosphere by means of
- ascertaining an oxygen content within the protective atmosphere,
- calculating a desired hydrogen content and/or desired nitrogen content of the protective atmosphere based on the ascertained oxygen content, and
- supplying hydrogen and/or nitrogen to the protective atmosphere in order to provide the calculated desired hydrogen and/or nitrogen content.

The float glass production unit according to the invention is provided with a float bath chamber comprising a bed of molten metal and a protective atmosphere above the bed, the protective atmosphere comprising nitrogen and hydrogen. It is further provided with control means for controlling the protective atmosphere, the control means including ascertaining means for ascertaining an oxygen content within the protective atmosphere, calculating means adapted to calculate a desired hydrogen content and/or nitrogen content within the protective atmosphere based on the ascertained oxygen content, and supply means adapted to supply hydrogen and/nitrogen to the protective atmosphere in order to provide the calculated hydrogen and/or nitrogen content.

By controlling the hydrogen content and/or nitrogen content of protective atmosphere in this way the composition of the protective atmosphere can be optimized, thereby minimizing the hydrogen to nitrogen ratio in order to reduce operating costs, and at the same time ensuring a sufficiently low oxygen content to prevent oxidation on the molten metal, especially molten tin.

Advantageous embodiments of the invention are the subject matter of the dependent claims.

Advantageously, ascertaining the oxygen content of the protective atmosphere comprises a measuring of freely available oxygen within the atmosphere. On the basis of this measurement, the oxygen partial pressure can be calculated. By controlling this oxygen partial pressure by supplying additional nitrogen and/or hydrogen if necessary, formation of tin oxide can be effectively prevented.

According to a further advantageous embodiment, ascertaining the oxygen content of the protective atmosphere comprises measuring a dewpoint and the freely available hydrogen within the atmosphere, and calculating the freely available oxygen within the atmosphere based thereon. This is also a reliable basis for calculation of the oxygen partial pressure. Especially, for some applications, measuring oxygen directly is not possible, as for example at higher temperatures oxygen reacts with hydrogen and creates humidity, which can only be detected by measuring the dewpoint.

According to a preferred embodiment, the temperature of the protective atmosphere is measured and the hydrogen content and/or nitrogen content of the protective atmosphere is calculated taking into account the measured temperature. By also taking into account temperature, more precise calculations can be made, whereby the protective atmosphere can be controlled more efficiently.

According to a preferred embodiment, controlling of the hydrogen content and/or nitrogen content of the protective atmosphere comprises calculating and supplying different hydrogen to nitrogen ratios in different zones of the protective atmosphere. Hereby, for example decreasing temperatures within the float bath chamber in the direction of glass flow can be taken into account, thereby optimizing the hydrogen to nitrogen ratios for various temperatures.

Advantageously, the control means are adapted to individually control the hydrogen and/or nitrogen content or supply at various locations within the protective atmosphere. For example, external hydrogen and/or nitrogen sources can be provided with a plurality of supply lines, each being provided with individually controllable flow valves, the supply lines supplying hydrogen or nitrogen to different locations or zones of the float bath chamber.

The invention will now be further explained with reference to the accompanying figures.

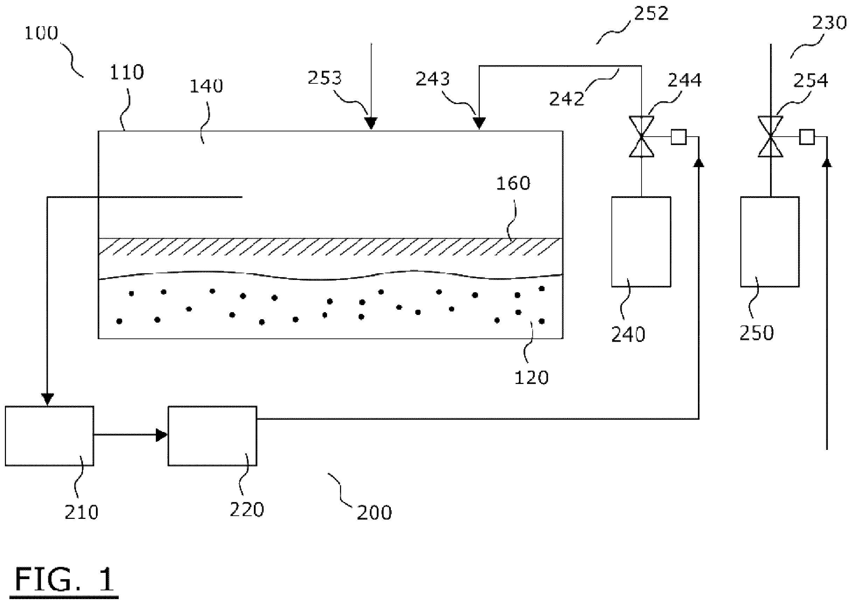

Figure 1 shows a preferred embodiment of a float glass production unit according to the invention.

A preferred embodiment of a float glass production unit, with which a preferred embodiment of the method according to the invention can be implemented, is shown in Figure 1.

In Figure 1, a float glass production unit is generally designated 100. It comprises a float bath chamber 110 provided with a bed or "bath" 120 of molten metal, preferably molten tin. This bed will be referred to as "tin bath" in the following. The use of tin in the float glass manufacturing process is advantageous due to its high specific gravity and its immiscibility with molten glass. The tin bath is used to provide a level and uniform surface for molten glass to harden on, as is well known in the art.

Above the tin bath 120, there is provided a positive pressure protective atmosphere 140 essentially comprising nitrogen and hydrogen. Typical hydrogen contents range from 3 to 10 %. The protective atmosphere is maintained at a pressure above ambient pressure in order to minimize an inflow of oxygen from the ambient air. In practice, the protective atmosphere will, however, include a small amount of oxygen, which must be minimized in order to ensure reliable conditions for glass production. The presence of oxygen in the protective atmosphere is disadvantageous in that it causes oxidation of tin, leading to formation of tin dioxide. Float glass which comes into contact with tin oxide is typically of lower quality, and must usually be discarded.

The float glass production unit 100 is provided with control means 200 for controlling the composition of the protective atmosphere. Control means 200 comprise measurement means 210 for measuring an actual composition of the protective atmosphere, calculating means 220 for calculating a desired composition of the protective atmosphere, and supply means 230 for supplying additional hydrogen and/or nitrogen to the protective atmosphere, thereby modifying its composition in the desired way.

Measurement means 210 are adapted for measurement of an oxygen content, and/or a hydrogen content and a dewpoint at least one location within the protective atmosphere 140. The term "content" as used herein shall comprise any appropriate quantitative measure relating to the presence of a gaseous chemical compound in the protective atmosphere 140, such as nitrogen, hydrogen or oxygen. Advantageously, measurement means 210 are adapted to calculate the freely available oxygen (i.e. gaseous oxygen not chemically bound to other components such as hydrogen) or the freely available hydrogen (i.e. gaseous hydrogen not chemically bound to other components), together with the dewpoint within the atmosphere.

Preferably, measurement means 210 are also adapted to measure a temperature at at least one location within the protective atmosphere 140. For this purpose, measurement means 210 can be provided with a corresponding number of temperature sensors (not shown) within the protective atmosphere 140. It is also possible to provide temperature sensors within the tin bath. Hereby, the amount of oxygen in solution within the tin bath can be ascertained. Advantageously, the measurement means 210 are also adapted to measure the oxygen or hydrogen contents and dew points at a number of positions within the protective atmosphere 140.

The measurement means 210 provide calculating means 220, which are especially provided as a programmable logic controller PLC, with measurement data. Calculating means 220 are adapted to calculate a desired hydrogen content and/or nitrogen content within the protective atmosphere 140 based on the measurement data of measurement means 210, i.e. the measured oxygen content and/or hydrogen content and dewpoint.

In a first embodiment, calculation means 220 calculate the desired hydrogen and/or nitrogen contents exclusively based on the measured oxygen content, i.e. content of freely available oxygen within the atmosphere.

Advantageously, the desired contents are calculated also taking into account a temperature within the protective atmosphere 140.

Alternatively, calculation means 220 calculate the desired hydrogen and/or nitrogen contents based on the measured content of freely available hydrogen and measured dewpoints within the atmosphere, wherein the oxygen content is calculated herefrom as an intermediate step. Based on this calculated oxygen content, desired hydrogen and nitrogen contents can be calculated.

On the basis of the calculated desired values for hydrogen and/or nitrogen contents, the control means 200, especially the calculating means 220, actuate supply means 230 to supply additional hydrogen and/or nitrogen to protective atmosphere 140, if necessary.

Supply means 230 comprise external hydrogen and nitrogen sources 240, 250 respectively. These are adapted to supply additional hydrogen and/or nitrogen to protective atmosphere 140 via supply lines 242,252. The supply lines connect with the float bath chamber at respective inlet ports 243,253. The flow through supply lines is controlled by means of controllable flow valves 244,254, which are actuated and controlled by calculating means 220. Depending on the desired content values as calculated by calculating means 220, flow valves 242, 252 can be opened or closed in a controllable manner in order to supply hydrogen and/or nitrogen to the protective atmosphere 140, thereby directly influencing the hydrogen and nitrogen content, and thus indirectly influencing the oxygen content within the protective atmosphere. Especially, the optimum hydrogen to nitrogen ratio as calculated by calculating means 220 can be provided. Based hereon, the oxygen concentration can be controlled, and the total gas volume can be reduced to a level at which free available oxygen does not increase.
As is well known in the art, molten glass is fed into the tin bath 120 in a continuous manner from a delivery canal (not shown) by means of a ceramic lip, usually referred to as a spout lip in the art (also not shown).

As is also known in the art, the molten glass moves along the surface of the tin bath forming a floating glass ribbon 160. During this flow along the tin bath, the temperature of the floating glass ribbon 160 is gradually reduced, typically from initial temperatures of around 1500°C or 1100°C to around 600°C, until the sufficiently solidified floating glass ribbon 160 can be lifted from the tin bath onto handling means such as rollers.

Due to this variation of temperature within the float bath, the nitrogen to hydrogen ratio also varies. It is therefore advantageous to provide supply means 230 with a plurality of individually controllable supply lines 242,252 connecting with float bath chamber 110 at different points. Hereby, an atmosphere zoning can be provided, especially along the flow direction of the glass ribbon within float bath 110. Hereby, it can be taken into account that at certain temperatures there is an equilibrium partial pressure of reacting gas (oxygen), at which a metal (e.g. Sn) is neither oxidized nor reduced. At lower partial pressures of oxygen, the metal will be reduced and, vice versa, at higher partial pressures it will be oxidized. Thus, if the partial pressure of oxygen and the temperature is known, it can be calculated if the atmosphere is oxidizing or reducing.

## Claims

1. Method for producing float glass comprising the following steps:
- Providing a float bath chamber (110) comprising a bed (120) of molten metal and a protective atmosphere (140) above the bed (120), the protective atmosphere comprising nitrogen and hydrogen,
- effecting a flow of molten glass onto the flow bath to provide a floating ribbon (160) of glass on the bed,
- after reducing the temperature of the floating glass ribbon (160) removing the floating glass ribbon from the bed (120),
- the method further comprising the steps of controlling the protective atmosphere (140) by means of
- ascertaining an oxygen content within the protective atmosphere (140),
- calculating a desired hydrogen content and/or desired nitrogen content of the protective atmosphere based on the ascertained oxygen content, and
- supplying hydrogen and/or nitrogen to the protective atmosphere in order to provide the calculated desired hydrogen and/or nitrogen content.

2. Method according to claim 1, wherein ascertaining the oxygen content of the protective atmosphere comprises measuring of freely available oxygen within the atmosphere.

3. Method according to claim 1 or claim 2, wherein ascertaining the oxygen content of the protective atmosphere comprises measuring a dewpoint and the freely available hydrogen within the atmosphere and calculating the freely available oxygen within the atmosphere based thereon.

4. Method according to claim 1, wherein the temperature of the protective atmosphere is measured and the hydrogen content and/or nitrogen content of the protective atmosphere is controlled taking into account the measured temperature.

5. Method according to any one of the preceding claims, wherein controlling of the hydrogen content and/or nitrogen content of the protective atmosphere comprises providing different hydrogen contents and/or nitrogen contents in different zones of the protective atmosphere (140) of the float bath chamber.

6. Float glass production unit with a float bath chamber (110) comprising a bed (120) of molten metal and a protective atmosphere (140) above the bed (120), the protective atmosphere comprising nitrogen and hydrogen, control means (200) for controlling the protective atmosphere (140), the control means (200) including ascertaining means (210) for ascertaining an oxygen content within the protective atmosphere (140), calculating means (220) adapted to calculate a desired hydrogen content and/or desired nitrogen content within the protective atmosphere (140) based on the ascertained oxygen content, and supply means (230) adapted to supply hydrogen and/nitrogen to the protective atmosphere in order to provide the calculated desired hydrogen and/or nitrogen content.

7. Unit according to claim 6, wherein the ascertaining means (210) comprise measurement means for measuring freely available oxygen within the protective atmosphere.

8. Unit according to claim 6 or 7, wherein the ascertaining means (210) comprise measurement means for measuring a dewpoint and freely available hydrogen within the protective atmosphere, and the calculating means (220) are adapted to calculate a freely available oxygen content within the protective atmosphere based thereon.

9. Unit according to any one of claims 6 to 8, wherein the measurement means (210) are adapted to measure a temperature within the protective atmosphere and calculate the desired hydrogen content desired and/or nitrogen content in the protective atmosphere taking into account the measured temperature.

10. Unit according to any one of claims 6 to 9, wherein the control means (200) are adapted to individually control the hydrogen and/or nitrogen content at various locations within the protective atmosphere.
